# EUROPEAN PATENT APPLICATION

(11) **EP 4 803 760 A1**
(43) Date of publication of application: **09.09.2026**
(21) Application number: 26160661.0
(22) Date of filing: 25.02.2026
(51) Int. Cl.: F16B 2/24, F16D 65/097, F16D 66/02

(54) **MOUNTING CLIP**

(30) Priority: 05.03.2025 GB 202503196
(71) Applicant: ArvinMeritor Technology, LLC, Troy, MI 48084 (US)
(72) Inventor: Leicht, Phillip, Troy (US); Sakhare, Sukrut, Troy (US); Adkins, Alexander, Troy (US); Philpott, Daniel, Troy (US)
(74) Representative: Anderson, Nicola Unity

(57) **Abstract**

A mounting clip for securing a component to a protrusion, comprising: an adjustable loop configured to grip said protrusion, the adjustable loop defining an internal perimeter within which said protrusion is received; and a pair of legs extending from the adjustable loop and configured to exert a biasing force upon a component positioned therebetween, each leg comprising a first end connected to the adjustable loop and a second distal end; wherein the legs are resiliently biased towards a nominal position with respect to one another, and wherein each leg crosses the other at a point between said first and second ends such that, upon compression of the legs towards one another, the internal perimeter of the loop is expanded; and, upon release of the legs, the legs return towards the nominal position such that the internal perimeter of the loop is contracted.

## Description

### FIELD OF THE DISCLOSURE

The present disclosure relates to a mounting clip, a disc brake assembly and a method of assembling a vehicle assembly.

### BACKGROUND OF THE DISCLOSURE

Within automotive assemblies there is regularly a need to support smaller components such as electrical harnesses or connectors relative to larger components such as structural chassis components or disc brake assemblies.

It is known to provide mounting plates as part of chassis or disc brake assemblies which are mounted during assembly of the chassis or disc brake assemblies and to which smaller components may be subsequently attached.

There is a need for an improved method for connecting smaller components to chassis or disc brake assemblies.

### SUMMARY OF THE DISCLOSURE

A first aspect of the invention provides A mounting clip for securing a component to a protrusion, comprising: an adjustable loop configured to grip said protrusion, the adjustable loop defining an internal perimeter within which said protrusion is received; and a pair of legs extending from the adjustable loop and configured to exert a biasing force upon a component positioned therebetween, each leg comprising a first end connected to the adjustable loop and a second distal end; wherein the legs are resiliently biased towards a nominal position with respect to one another, and wherein each leg crosses the other at a point between said first and second ends such that, upon compression of the legs towards one another, the internal perimeter of the loop is expanded; and, upon release of the legs, the legs return towards the nominal position such that the internal perimeter of the loop is contracted.

A mounting clip may provide a convenient mounting point for a variety of components that can be retrofit to any suitable protrusion by compressing the pair of legs to expand the adjustable loop when assembling over the protrusion, before releasing the legs to clamp the adjustable loop onto protrusion.

Optionally, the clip is formed as a unitary body, optionally wherein the clip comprises a length of wire from which the adjustable loop and the pair of legs is formed.

Forming the mounting clip as a unitary body may provide a simple and cheap method of manufacturing the clip.

Optionally, the mounting clip is manufactured from spring steel.

Optionally, both legs of the pair of legs extend from the same radial side of the adjustable loop.

Providing both legs extending from the same radial side may provide a convenient mechanism for expanding a circumference of the adjustable loop when the legs are compressed together.

Optionally, each of the pair of legs extends substantially parallel to the other.

Providing both legs extending parallel to each other may provide a convenient surface for gripping the component between the pair of legs.

Optionally, the pair of legs comprises an engagement feature for exerting the biasing force upon the component positioned between the pair of legs.

An engagement feature may provide reduce the likelihood of the component slipping or otherwise moving relative to the pair of legs.

Optionally, the engagement feature comprises a narrowed region between the pair of legs.

A narrowed region may prevent the component from moving in a direction along the length of the pair of legs.

Optionally, the narrowed region is formed by an angled portion at a distal end of each leg.

The angled portion may provide an end stop to prevent the gripped component slipping out of the pair of legs.

Optionally, the angled portion of each leg comprises an extension portion that extends away from the other leg.

Providing an extension portion extending away from the other leg may provide a lever for compressing the legs together, which may improve ease of operation of the mounting clip.

Optionally, the angled portion of each leg comprises an extension portion that extends towards the other leg.

The extension portion may provide an end stop closer to the adjustable loop for more closely constraining movement of the held component
Optionally, the adjustable loop comprises a single coil.
Providing a single loop may reduce the overall size or thickness of the clip.

Optionally, the adjustable loop comprises a plurality of abutting coils.

Providing a plurality of coils may increase the thickness of the adjustable loop which may reduce the likelihood of the adjustable loop and hence the clip pivoting about the protrusion.

Optionally, the adjustable loop comprises a connection portion comprising a loop that is external to the internal perimeter and is formed integral to the adjustable loop.

Providing a connection portion external to the adjustable loop in addition to the pair of legs may allow a single clip to be used to support multiple components.

A second aspect of the invention provides a disc brake assembly comprising: a chassis component comprising a protrusion; a sensor system comprising a harness; and a mounting clip according to the first aspect of the invention, wherein the adjustable loop of the mounting clip is installed to grip the protrusion, and the harness is retained between the pair of legs of the mounting clip.

A third aspect of the invention provides a method of assembling a vehicle assembly comprising: a chassis component comprising a protrusion; a sensor system comprising a harness; and a mounting clip comprising an adjustable loop defining an internal perimeter, and a pair of legs extending from the adjustable loop and resiliently biased towards a nominal position, the method comprising: compressing the pair of legs towards each other to expand an internal perimeter of the mounting clip adjustable loop; inserting the protrusion through the internal perimeter of the mounting clip adjustable loop; releasing the pair of legs to allow them to move towards the nominal position such that the internal perimeter of the mounting clip adjustable loop contracts and grips the protrusion; and inserting the harness between the pair of legs, wherein the pair of legs are configured to exert a biasing force upon the harness to hold the harness in place relative to the protrusion.

Optionally, the method is carried out in the order specified above.

### BRIEF DESCRIPTION OF THE DRAWINGS

Further features and advantages of examples embodying the present disclosure will be further described below, by way of example only, with reference to the accompanying drawings in which:
Figure 1 shows a disc brake assembly;
Figures 2a and 2b show a portion of a disc brake assembly;
Figures 3a and 3b show a mounting clip;
Figures 4a to 4c show a schematic representation of an assembly sequence of a vehicle assembly;
Figure 5 shows a mounting clip;
Figure 6 shows a mounting clip;
Figures 7a and 7b show a schematic representation of a vehicle assembly;
Figure 8a shows a mounting clip; and
Figure 8b shows a portion of a vehicle assembly.

### DETAILED DESCRIPTION

As required, detailed embodiments of the present invention are disclosed, herein; however, it is to be understood that the disclosed, embodiments are merely exemplary of the invention, that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

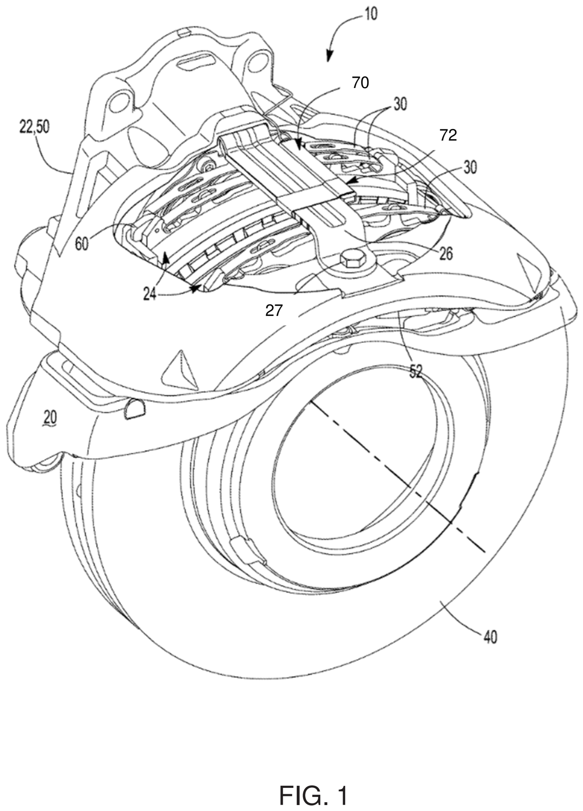

Referring to Figure 1, an example of a disc brake assembly 10 is shown for context. The disc brake assembly 10 may be provided as part of a vehicle, such as a truck, bus, farm equipment, military transport or weaponry vehicle, or cargo loading equipment for land, air, or marine vessels. In at least one configuration, the disc brake assembly 10 may include a brake carrier 20, a brake caliper 22, at least one brake pad assembly 24, a retainer strap 26 coupled to the assembly via a fastener 27, and a sensor assembly 70 comprising a harness 72. One or more pad springs 30 may also be provided with the disc brake assembly 10.

The brake carrier 20 may facilitate mounting of the disc brake assembly 10. For instance, the brake carrier 20 may be fixedly mounted to a component of the vehicle, such as an axle assembly or a knuckle. The brake carrier 20 may receive and support the brake pad assemblies 24 and may include an opening through which a brake rotor 40 may extend. As such, the brake carrier 20 may straddle the brake rotor 40 and may help position brake pad assemblies 24 on opposite sides of the brake rotor 40.

The brake caliper 22 may be mounted to the brake carrier 20 and may support various components of the disc brake assembly 10. In addition, the brake caliper 22 may help position the brake pad assemblies 24 with respect to the brake rotor to facilitate braking of the vehicle as will be discussed in more detail below. In the example shown, the brake caliper 22 includes a caliper housing 50 and a caliper bridge 52. The caliper housing 50 may be moveably disposed on the brake carrier 20. For example, the caliper housing 50 may be slidable along a pair of guide pins that may be fixedly disposed on the brake carrier 20. The caliper housing 50 may receive or support various components that may facilitate actuation of a brake pad assembly 24. For instance, the caliper housing 50 may support a tappet 60 that may protrude from an internal chamber of the caliper housing 50.

The tappet 60 may extend from the caliper housing 50 toward the brake rotor 40 to engage a brake pad assembly 24. The tappet 60 may be moveable along an axis with respect to the caliper housing 50 such that the tappet 60 may move toward and away from the brake rotor 40.

The sensor system 70 comprises a sensor (not shown) for determining the condition of the brake pad assemblies. The sensor may be electrically powered and/or controlled, and as such the sensor system 70 comprises an electrical harness 72 connecting the sensor to a power source and/or controller. The electrical harness may comprise one or more electrical wires and may for example be formed in multiple sections coupled together via connectors or adapters. There is a need to secure the electrical harness 72 relative to the brake carrier 20. As such, a mounting clip 100 may be provided as will be discussed in more detail herein.

It will be appreciated that although described with reference to a disc brake assembly 10, and in particular to a sensor system 70 coupled to a brake carrier 20, the mounting clip 100 discussed herein may be used as part of any vehicle system or assembly.

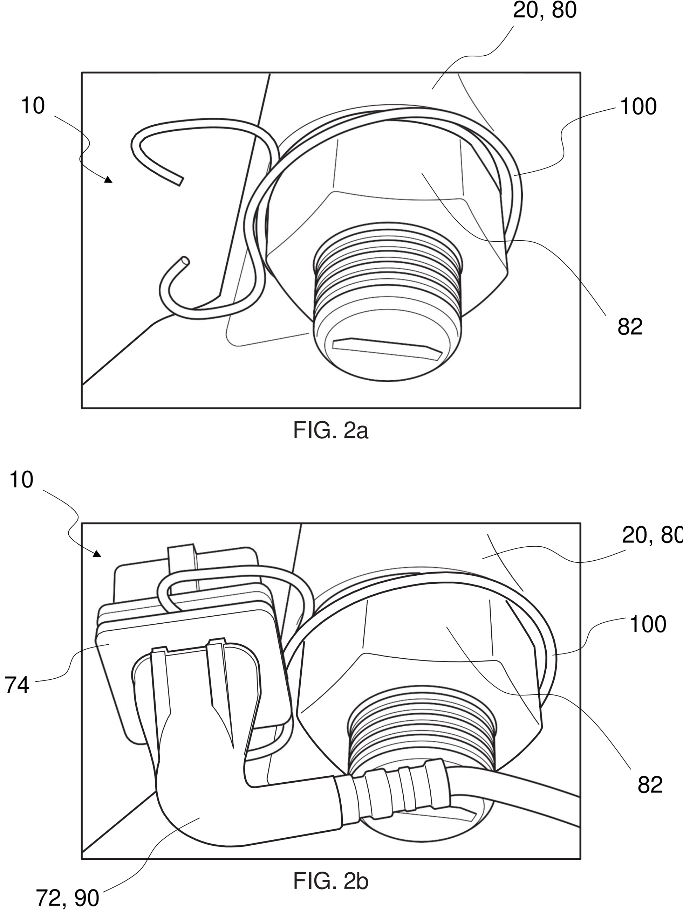

Figure 2a shows an enlarged view of a portion of a disc brake assembly 10 with a mounting clip 100 secured to the brake carrier 20. More generally, the mounting clip 100 may be secured to any chassis component 80 or vehicle component, in particular to a protrusion 82 thereof. In the example shown, the protrusion 82 is a nut fastened to a bolt however it will be appreciated that the protrusion 82 may be any suitable structure or component. By way of non-limiting example, the protrusion 82 may comprise a stud, a bolt or a bar. The protrusion may be formed integral to the chassis component 80, or may be a separate component connected to the chassis component 80. Generally, the protrusion 82 has an axial end over which the mounting clip 100 is assembled and a longitudinal axis along which the mounting clip 100 is translated during assembly. The protrusion 82 may have any cross-sectional profile.

The mounting clip 100 is configured to secure a component 90 to the chassis component 80 as shown in Figure 2b. That is to say that the mounting clip 100 is configured to prevent or limit movement of the component 90 relative to the chassis component 80. In the example shown, the component 90 is the electrical harness 72 of the sensor system 70, and in particular a connector 74 thereof. Providing a mounting clip 100 that can be assembled over a longitudinal end of the protrusion 82 may for example allow the mounting clip 100, and hence the electrical harness 72, to be assembled prior to the chassis component 80. The mounting clip 100 and/or the component 90 may be retrospectively assembled to the chassis component 80.

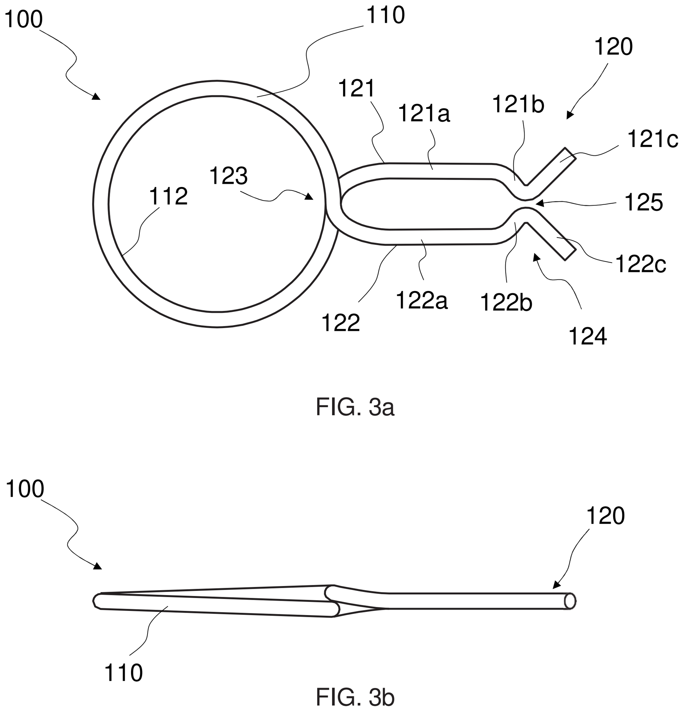

Figures 3a and 3b show a top and side view of an example of a mounting clip 100 in isolation. The mounting clip 100 comprises an adjustable loop 110 and a pair of legs 120 extending from the adjustable loop 110. The adjustable loop 110 is configured to grip the protrusion 82 when assembled or installed. As such movement of the adjustable loop 110 relative to the protrusion 82 (for example via translation or rotation) is resisted by friction. The adjustable loop 110 defines an internal perimeter 112 that contacts the protrusion 82 when installed. Providing an adjustable loop 110 extending completely around the protrusion 82 may increase the contact area and hence friction force between the two components, which may reduce the likelihood of the mounting clip 100 and hence the components 90 moving relative to the protrusion 82.

The pair of legs 120 comprises a first leg 121 and a second leg 122 that are resiliently biased towards a nominal position relative to each other and/or the adjustable loop 110. That is to say that the pair of legs 120 resist movement away from their nominal position and that, if moved from their nominal position to an offset position, will return towards their nominal position if the load holding them in the offset position is removed. When the pair of legs 120 are in their nominal position, the adjustable loop 110, in particular the internal perimeter 112 of the adjustable loop 110 has a nominal width or diameter. It will be appreciated that the internal perimeter 112 may have any shape and is not necessarily circular as shown in the figures.

Each of the first 121 and second 122 legs comprise a first end connected to the adjustable loop 110 and a second distal end that is substantially free and/or unconstrained. The first 121 and second legs 122 cross each other at a point between their first and second ends such that they overlap at an overlap region 123. As such, both the first 121 and second 122 legs may extend from the same radial side of the adjustable loop 110. Where the adjustable loop 110 is non-circular or otherwise does not have a radial side, it will be appreciated that the pair of legs 120 may more generally extend from the same side of the adjustable loop 110. It will further be appreciated that, although shown as crossing immediately adjacent or at the adjustable loop 110, the overlap region 123 may be spaced apart from the adjustable loop 110. As a result of the overlap region, the pair of legs 120 are configured such that when the first 121 and second 122 legs are compressed towards each other (i.e. moved away from their nominal position towards one another) they cause the internal perimeter 112 of the adjustable loop 110 to expand. That is to say that, when the pair or legs 120 are moved from their nominal position to an offset position closer towards each other, the width or diameter of the internal perimeter 112 of the adjustable loop 110 is greater than when the pair of legs 120 are in their nominal position. This movement may be applied, for example, by an operator squeezing the pair of legs 120 together. The user may for example use a clamping tool such as clamping pincers or similar to compress the pair of legs 120 together. When the load applied to the pair of legs 120 is released, the legs 121, 122 return towards their nominal position and the internal perimeter 112 contracts to return towards its nominal width or diameter. It will be appreciated that where the mounting clip 100 is installed over a protrusion 82 having a width or diameter greater than the nominal width or diameter of the internal perimeter 112, that the internal perimeter 112 and hence the pair of legs 120 will not return entirely to their nominal diameter and nominal position respectively.

The mounting clip 100 may be formed as a unitary body such that movement of the pair of legs 120 away from their nominal position causes expansion or contraction of the adjustable loop and vice versa. In particular, the mounting clip 100 may be formed from a single length of metallic wire bent into the profile shown in Figures 3a and 3b. Manufacturing the mounting clip 100 from a single length of wire may allow the clip to be manufactured using any suitable known method, for example using computer numerical controlled spring bending equipment. These methods are commonly known in the art and will not be discussed in detail here. It will be appreciated that although shown as being circular, the wire may have any shaped cross-sectional area. By way of non-limiting example, the wire may comprise a metal allow such as spring steel. In particular, the wire may comprise stainless steel spring steel, having high corrosion resistance. The material properties of the wire may be selected dependent at least partially on the desired force required to move the pair of legs 120 from their nominal position.

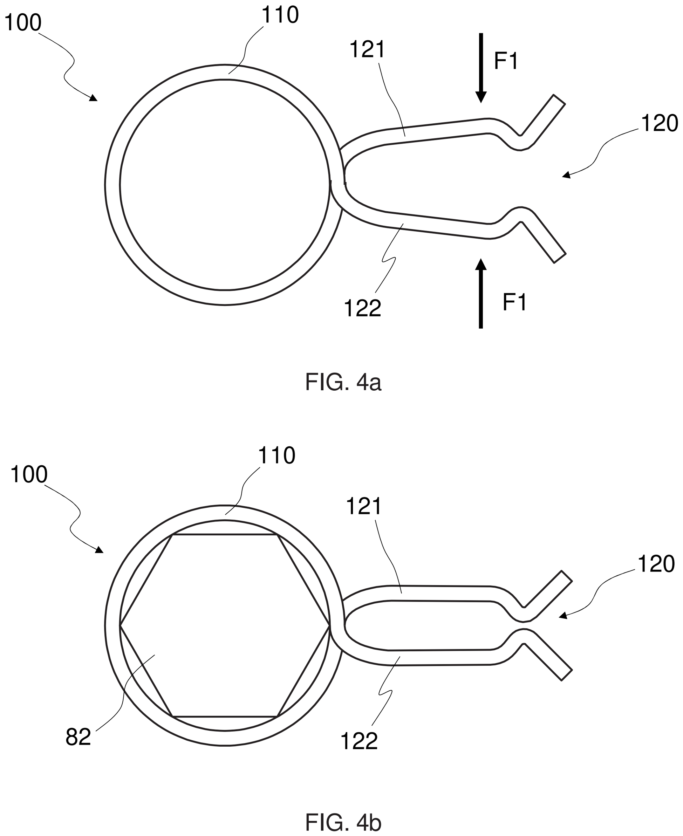

Figures 4a to 4d show a schematic representation of an assembly sequence of the mounting clip 100 to a protrusion 82. Figure 4a shows the mounting clip 100 with the pair of legs 120 in the nominal position. The arrows represent a first force F1 applied to the first 121 and second 122 legs to compress the legs to expand the adjustable loop 110 as described previously.

Figure 4b shows the mounting clip 100 assembled onto the protrusion 82. Once the mounting clip 100 is assembled over the protrusion, the first force F1 is removed such that the pair of legs 120 return towards their nominal position. As shown in Figure 4b, the first 121 and second 122 legs are unable to return fully to their nominal position since the internal perimeter 112 of the adjustable loop 110 is in contact with the protrusion 82, which has a width greater than the nominal diameter of the internal perimeter 112. As a result, the biasing force, which would otherwise act to return the pair of legs 120 to their nominal position, acts to clamp the adjustable loop 110 to the protrusion 82.

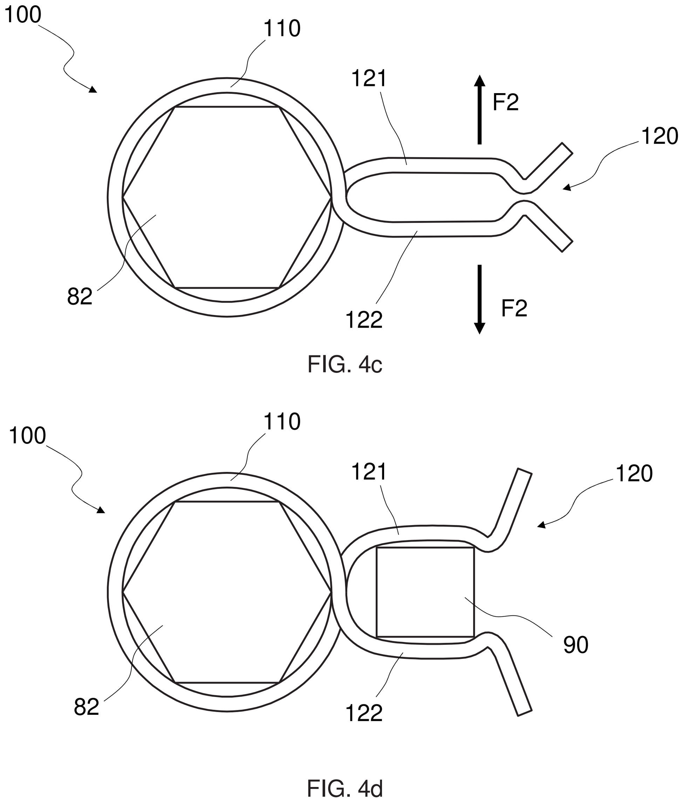

Figures 4c and 4d show how a component 90 (such as the connector 74 described previously with reference to Figure 2b) may be subsequently connected to the protrusion 82. In Figure 4c, the arrows indicate a second force F2 applied to the pair of legs 120 to move the legs away from each other such that the component 90 may be positioned therebetween as shown in Figure 4d. In some cases, the second force F2 may be applied as a result of the component 90 being inserted between the first 121 and second 122 legs. The pair of legs 120 are configured such that, when the component 90 is positioned therebetween, the first 121 and second 122 legs exert a biasing force upon the component 90 to hold the component 90 stationary relative to the protrusion 82. In this way, the overall force exerted by the mounting clip 100 is effectively split between: a clamping force exerted by the adjustable loop 110 on the protrusion 82; and a biasing force, optionally a further clamping force, exerted by the pair of legs 120 on the component 90.

To help retain the component 90 between the pair of legs 120, the pair of legs 120 may comprise an engagement feature 124. In the example shown in Figures 3 and 4, the engagement feature 124 comprises a narrowed region 125 between the first 121 and second 122 legs. The narrowed region 125 is formed as a result of each of the first 121 and second 122 legs comprising a first leg portion 121a, 122a extending from the adjustable loop 110 and an angled leg portion 121b, 122b towards the second end of the leg, as shown most clearly in Figure 3a. Each angled portion 121b, 122b extends at an angle relative to the first leg portion towards the other leg, and in particular towards the other angled portion. The resulting narrowed region 125 may help to retain the component 90 within the pair of legs 120, for example by preventing the component 90 from sliding out from the pair of legs 120 in a direction away from the adjustable loop 110.

To improve ease of operation, and in particular ease of installation, of the mounting clip 100, each leg 121, 122 may further comprise a leg extension portion 121c, 122c extending from the angled leg portion 121b, 122b. In the example shown in Figures 3 and 4 each leg comprises an extension portion 121c, 122c extending at an angle relative to the angled leg portion 121b, 122b and away from the other leg. This arrangement may for example provide a convenient portion of the leg for a user to compress and/or expand when installing the mounting clip 100. The extension portion 121c, 122c may further help to increase the moment applied to the adjustable loop 110 by increasing the moment arm. This may in turn reduce the force F1, F2 required to expand and/or contract the internal perimeter 112 of the adjustable loop 110.

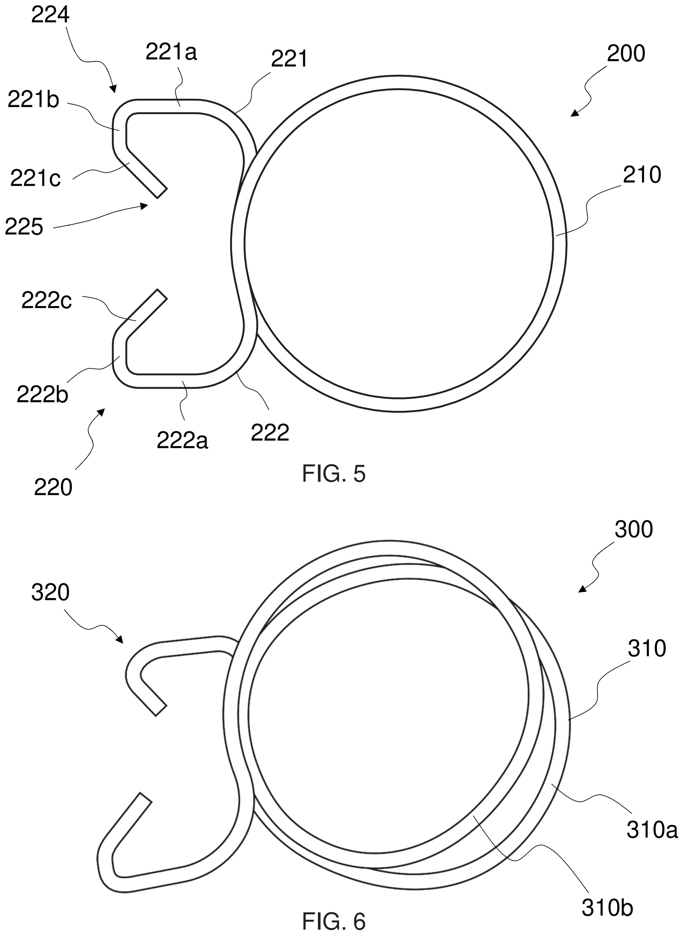

Figures 5 and 6 show a second example of a mounting clip 200 and a third example of a mounting clip 300 respectively. Each mounting clip 200, 300 is similar to the mounting clip 100 described with reference to Figures 3 and 4, with similar component features labelled with reference numerals in the 200 and 300 series respectively.

The pair of legs 220 of the second mounting clip 200 are similar to those of the first mounting clip 100, with each leg comprising a first leg portion 221a, 221b respectively. The second mounting clip 200 differs from the first mounting clip 100 in that the angled portion 221b, 222b of each leg comprises an extension portion 221c, 222c that extends towards the other leg. In this way, the narrowed region 225 is formed towards the second ends of the first 221 and second 222 legs. This arrangement may allow the engagement feature 224 to be positioned closer towards the adjustable loop 210, which may in turn allow movement of the component (not shown) between the pair of legs 220 to be more closely constrained.

The third mounting clip 300 comprises a pair of legs 320 having an engagement feature 324 identical to that of the second mounting clip 200. The third mounting clip differs from the first 100 and second 200 mounting clips in that the adjustable loop 310 of the third mounting clip 300 comprises a plurality of coils 310a, 310b. Each coil 310a, 310b defined a complete loop and, although shown for clarity in Figure 6 as being spaced apart, each coil may abut the coil(s) adjacent. It will be appreciated that although shown as comprising two coils, the adjustable loop 310 may comprise any number of coils, such as three, four or five.

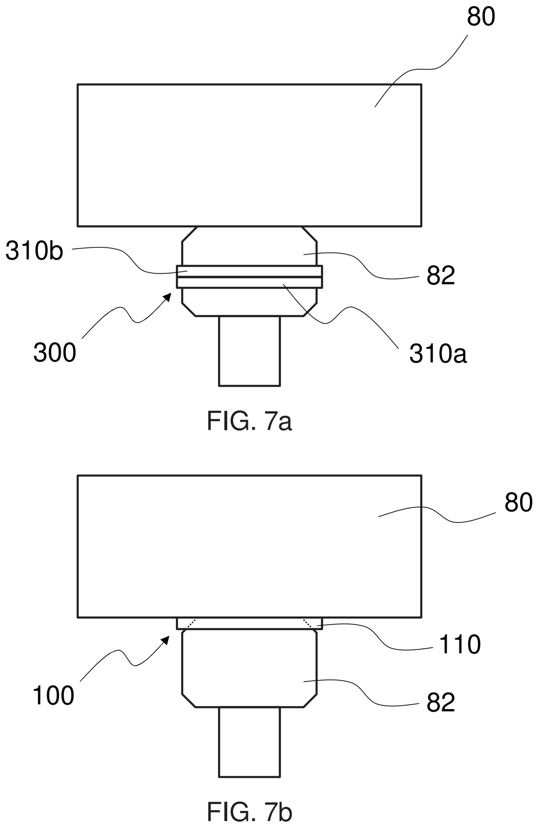

Providing an adjustable loop 310 comprising a plurality of abutting coils 310a, 310b may reduce the likelihood of the mounting clip 300 moving relative to the protrusion. Figures 7a and 7b show an example of a third mounting clip 300 and a first mounting clip 100 coupled to a vehicle component 80 respectively. The third mounting clip 300 comprises an adjustable loop 310 formed of two coils 310a, 310b and as such has a greater thickness and hence contact area between the adjustable loop 310 and the protrusion 82. This may increase the friction force between the two components which may reduce the likelihood of the mounting clip 300 moving relative to the protrusion 82. Conversely, the adjustable loop 110 of the first mounting clip 100 comprises a single loop. This provides an adjustable loop having a reduced thickness (relative to that of the third mounting clip 300) which may allow the clip to be assembled in smaller areas. By way of non-limiting example, Figure 7b shows the first mounting clip 100 assembled onto a protrusion 82 having a chamfered edge (shown as a dashed line) adjacent the chassis component 80. As a result of the reduced thickness of the adjustable loop 110, the first mounting clip 100 can be assembled onto the chamfered edge which may be used to more securely retain the adjustable loop 110 relative to the chassis component 80.

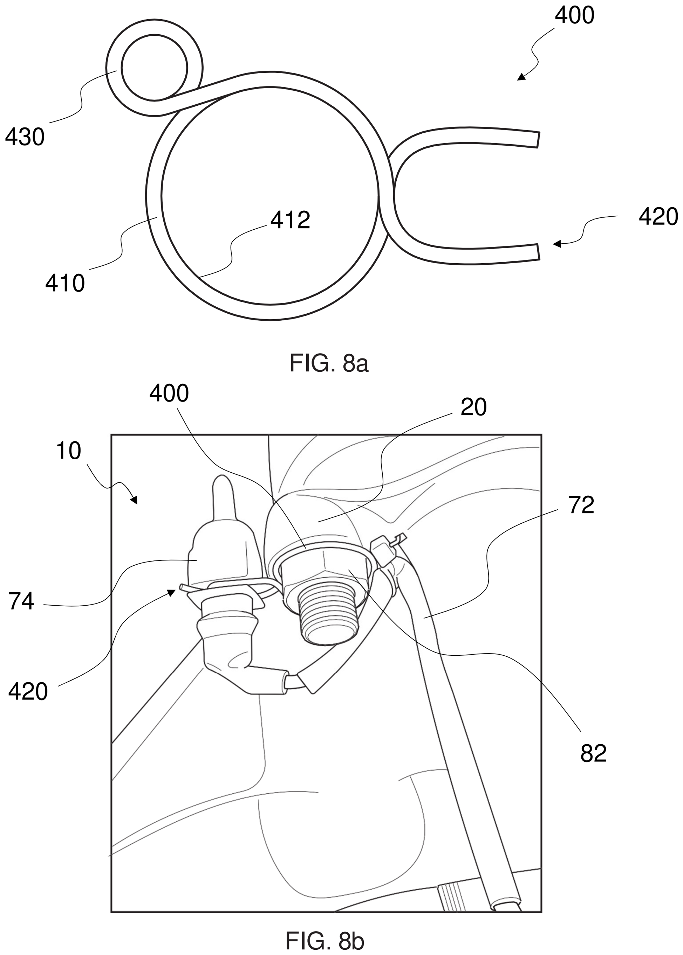

Figure 8a shows a fourth example of a mounting clip 400 substantially similar to the first mounting clip 100. It will be appreciated that although shown without an engagement feature, the fourth mounting clip 400 may comprise an engagement feature similar to that of the first 100 or second 200 mounting clip. The fourth mounting clip 400 comprises an adjustable loop 410 having a connection portion 430 formed integral to the adjustable loop 410. The connection portion 430 may otherwise be known as an interruption, connecting feature or external loop. The connection portion 430 is a loop formed external to the internal perimeter 412 of the adjustable loop 410. That is to say that the connection portion 430 does not encroach on the internal perimeter 412 of the adjustable loop 410. The connection portion 430 is provided to secure further components to the mounting clip 400, in addition to the component 90 held between the pair of legs 420. It will be appreciated that the connection portion 430 may take any suitable form, however forming the connection portion 430 as a continuous loop extending from the adjustable loop 410 may allow the mounting clip 400 to be manufactured as a unitary body, for example from a single piece of wire bent into shape, as described previously.

Figure 8b shows a portion of a disc brake assembly 10 with a mounting clip 400 secured to the brake carrier 20. The mounting clip 400 is assembled over a protrusion 82 and a component, in this case an electrical harness connector 74, is supported between the pair of legs 420 of the mounting clip 400. To further support the electrical harness 72, the electrical harness 72 is connected to the adjustable loop 410 of the mounting clip 400 via the connection portion (not visible in Figure 8b). By way of non-limiting example, the harness 72 is coupled to the connection portion 430 via a cable tie or similar flexible fastener passed through the connection portion.

Although the disclosure has been described above with reference to one or more preferred examples, it will be appreciated that various changes or modifications may be made without departing from the scope of the appended claims.

## Claims

1. A mounting clip for securing a component to a protrusion, comprising:
an adjustable loop configured to grip said protrusion, the adjustable loop defining an internal perimeter within which said protrusion is received; and
a pair of legs extending from the adjustable loop and configured to exert a biasing force upon a component positioned therebetween, each leg comprising a first end connected to the adjustable loop and a second distal end;
wherein the legs are resiliently biased towards a nominal position with respect to one another, and wherein each leg crosses the other at a point between said first and second ends such that, upon compression of the legs towards one another, the internal perimeter of the loop is expanded; and, upon release of the legs, the legs return towards the nominal position such that the internal perimeter of the loop is contracted.

2. A mounting clip according to claim 1, wherein the clip is formed as a unitary body, optionally wherein the clip comprises a length of wire from which the adjustable loop and the pair of legs are formed.

3. A mounting clip according to claim 2, wherein the mounting clip is manufactured from spring steel.

4. A mounting clip according to any preceding claim, wherein both legs of the pair of legs extend from the same radial side of the adjustable loop.

5. A mounting clip according to any preceding claim, wherein each of the pair of legs extends substantially parallel to the other.

6. A mounting clip according to any preceding claim, wherein the pair of legs comprises an engagement feature for exerting the biasing force upon the component positioned between the pair of legs.

7. A mounting clip according to claim 6, wherein the engagement feature comprises a narrowed region between the pair of legs.

8. A mounting clip according to claim 7, wherein the narrowed region is formed by an angled portion towards a distal end of each leg.

9. A mounting clip according to claim 8, wherein the angled portion of each leg comprises an extension portion that extends away from the other leg; or wherein the angled portion of each leg comprises an extension portion that extends towards the other leg.

10. A mounting clip according to any preceding claim, wherein the adjustable loop comprises a single coil.

11. A mounting clip according to any of claims 1 to 9, wherein the adjustable loop comprises a plurality of abutting coils.

12. A mounting clip according to any preceding claim, wherein the adjustable loop comprises a connection portion comprising a loop that is external to the internal perimeter and is formed integral to the adjustable loop.

13. A disc brake assembly comprising:
a chassis component comprising a protrusion;
a sensor system comprising a harness; and
a mounting clip according to any of claims 1 to 12, wherein the adjustable loop of the mounting clip is installed to grip the protrusion, and the harness is retained between the pair of legs of the mounting clip.

14. A method of assembling a vehicle assembly comprising: a chassis component comprising a protrusion; a sensor system comprising a harness; and a mounting clip comprising an adjustable loop defining an internal perimeter within which said protrusion is received, and a pair of legs extending from the adjustable loop and resiliently biased towards a nominal position, the method comprising:
compressing the pair of legs towards each other to expand the internal perimeter of the mounting clip adjustable loop;
inserting the chassis component protrusion through the internal perimeter of the mounting clip adjustable loop;
releasing the pair of legs to allow them to move towards the nominal position such that the internal perimeter of the mounting clip adjustable loop contracts and grips the protrusion; and
inserting the harness between the pair of legs, wherein the pair of legs are configured to exert a biasing force upon the harness to hold the harness in place relative to the protrusion.

15. A method according to claim 14, wherein the method is carried out in the order specified in claim 14.
